# EUROPÄISCHE PATENTSCHRIFT

(11) **EP 0 462 124 B1**
(45) Veröffentlichungstag und Bekanntmachung des Hinweises auf die Patenterteilung: **25.05.1994**
(21) Anmeldenummer: 90903760.8
(22) Anmeldetag: 05.03.1990
(51) Int. Cl.: H02M 3/156, H03K 17/08

(54) **VERFAHREN ZUM BETREIBEN EINES SCHALTREGLERS SOWIE ANORDNUNG**
PROCESS AND ARRANGEMENT FOR OPERATING A SWITCHING CONTROL
PROCEDE ET DISPOSITIF POUR L'ACTIONNEMENT D'UN REGULATEUR DE DISTRIBUTION

(30) Priorität: 08.03.1989 DE 3907410
(43) Veröffentlichungstag der Anmeldung: 27.12.1991
(73) Patentinhaber: ANT Nachrichtentechnik GmbH, D-71522 Backnang (DE)
(72) Erfinder: NATHAN, Adolf, D-7150 Backnang (DE)
(86) Internationale Anmeldenummer: DE9000157
(87) Internationale Veröffentlichungsnummer: WO9010972

(56) Entgegenhaltungen:
- EP-A- 0 027 847
- US-A- 4 263 644
- US-A- 4 378 580
- US-A- 4 428 016
- US-A- 4 771 357

## Beschreibung

Die Erfindung betrifft ein Verfahren gemäß dem Oberbegriff des Patentanspruchs 1 sowie eine Anordnung hierzu.

Schaltregler werden häufig mit Strombegrenzungseinrichtungen ausgestattet, die bei zu hohen Lastströmen das Schaltregler-Stellglied ausschalten, vgl. beispielsweise DE 34 02 479 A1. Beim Schaltregler gemäß 34 02 479 A1 wird im Lastkreis eine dem Laststrom entsprechende Spannung gebildet, die auf den Pulsfrequenzmodulator steuernd einwirkt. Beim Schaltregler gemäß EP 27 847 A1 wird ein Signal in Abhängigkeit des Stromes durch das Stellglied erfaßt und zusammen mit einem laststromproportionalen Signal zur Steuerung des Pulsbreitenmodulators verwendet.

Aus der US 4,771,357 ist eine Treiberstufe für einen Schalttransistor bekannt mit integrierter Strombegrenzung. Die Strombegrenzung umfaßt eine Vergleichsstufe, die ein zum Strom über den Schalttransistor proportionales Signal mit einem von einem Steuersignal für den Schalttransistor abgeleiteten Signal als Referenzsignal vergleicht. Wenn das stromproportionale Signal den Referenzwert übersteigt, wird der Schalttransistor abgeschaltet. Hinweise zum Einsatz dieser Treiberstufe bei Schaltreglern enthält die US 4,771,357 nicht. Wie das Steuersignal beschaffen ist und ob es vorgegeben oder von einem anderen Signal abgeleitet wird geht aus der US 4,771,357 nicht hervor.

Aufgabe der Erfindung ist es, das Verfahren ausgehend vom Oberbegriff des Patentanspruchs 1 so fortzubilden, daß die Strombegrenzung hinsichtlich ihres Ansprechwertes genau arbeitet. Außerdem soll eine Anordnung zum Durchführen dieses Verfahrens angegeben werden. Diese Aufgabe wird hinsichtlich des Verfahrens durch die Schritte des Patentanspruchs 1 und hinsichtlich der Anordnung durch die Merkmale des Patentanspruchs 4 gelöst. Die Patentansprüche 2 und 3 zeigen Weiterbildung des Verfahrens und die Patentansprüche 5 bis 7 Weiterbildungen der Anordnung auf.

Die Erfindung besitzt folgende Vorteile:
Durch die Auswertung der Steuerimpulse des Stellgliedes für die Strombegrenzung ist eine schnelle Abschaltung des Stellgliedes bei plötzlicher Laständerung möglich. Aus diesem Grunde eignet sich das Verfahren die Anordnung gemäß der Erfindung für hohe Schaltfrequenzen. Durch die direkte Auswertung des Stromes durch das Stellglied wird diese schnelle Reaktion noch unterstützt. Verzögerungen durch eine sekundärseitige Stromauswertung, wie etwa beim Schaltregler gemäß DE 34 02 479 A1, treten nicht auf. Mit der Erfindung läßt sich ein Schaltregler mit rücklaufender Kennlinie ohne großen Aufwand realisieren. Für Schaltregler mit Potentialtrennung (Transformator zwischen Speisequelle und Last) ist die Erfindung vorteilhaft einsetzbar, da die Strombegrenzung allein im Primärkreis erfolgen kann. Lastproportionale Signale müssen für die Strombegrenzung nicht in den Primärkreis übertragen werden. Die Erfindung ist auch vorteilhaft einsetzbar, wenn für die Strombegrenzung ein genauer Ansprechwert gefordert ist, d.h. ein exakt reproduzierbarer Wert für den Umkehrpunkt der rücklaufenden Kennlinie. Für Schaltregler mit konstanter Energieabgabezeit - DE 34 02 479 A1, EP 205 630 A1 - ist die Erfindung sehr vorteilhaft einsetzbar.

Anhand der Zeichnungen wird ein Ausführungsbeispiel der Erfindung nun näher erläutert. Es zeigen
- Figur 1: ein Prinzipschaltbild eines Schaltreglers nach der Erfindung,
- Figur 2: ein Schaltbild der Strombegrenzungseinrichtung.

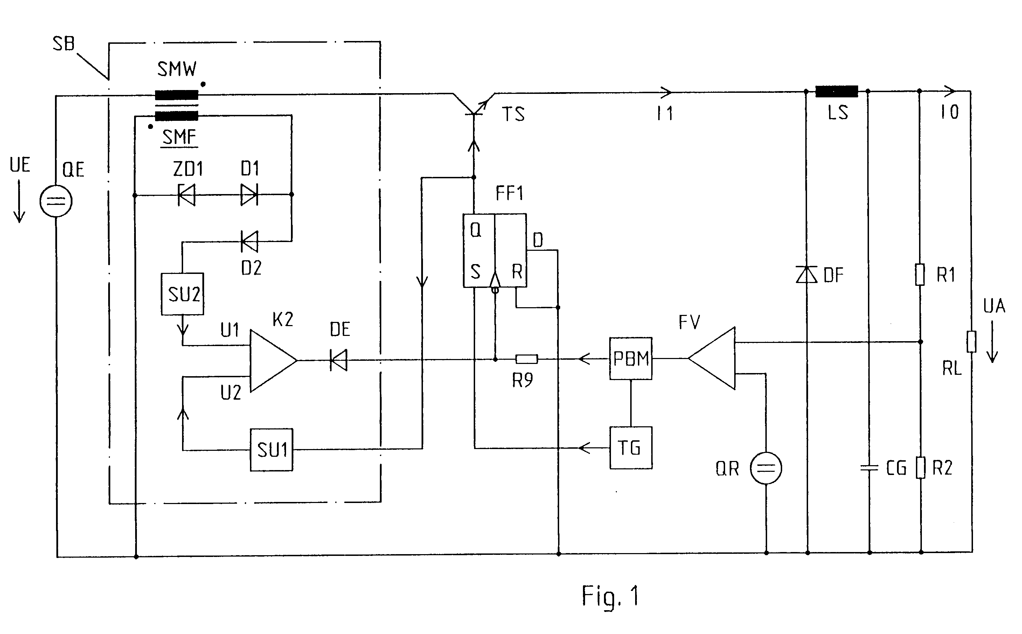

Das Prinzipschaltbild nach Figur 1 stellt einen Schaltregler mit Pulsbreitensteuerung dar. An die eingangsseitige Gleichspannungsquelle QE mit der Eingangsspannung UE ist in Serie das Stellglied, hier ausgebildet als Bipolar-Leistungsschalttransistor TS, mit der Schaltregler-Induktivität LS geschaltet. Im dargestellten Beispiel ist der Schaltregler als Flußwandler ausgebildet. Die Freilaufdiode DF liegt im Lastkreis mit der Last RL. Der Kondensator CG ist ein ausgangsseitiger Glättungskondensator. Die an der Last RL abfallende Ausgangsspannung UA wird über einen Spannungsteiler R1, R2 erfaßt. Der Spannungsteilerabgriff ist mit einem Vergleichseingang eines Fehlerverstärkers FV verbunden. An den anderen Eingang des Fehlerverstärkers FV ist eine Referenzspannungsquelle QR angeschlossen. Je nach Höhe der Ausgangsspannung UA liefert der Fehlerverstärker FV ein Eingangssignal für einen Pulsbreitenmodulator PBM. Ein Taktgenerator TG liefert an einem seiner Ausgänge ein Sägezahnsignal zur Steuerung des Pulsbreitenmodulators PBM. Den Einschaltzeitpunkt des Stellgliedes bestimmt ein Taktgenerator TG, wohingegen der Ausschaltzeitpunkt vom Pulsbreitenmodulator bestimmt wird. Es kann der integrierte Baustein TDA 1060 verwendet werden, der den Pulsbreitenmodulator PBM, den Taktgenerator TG, den Fehlerverstärker FV sowie die dazugehörige Verknüpfungslogik enthält.

Zur Strombegrenzung des Laststromes I0 ist erfindungsgemäß eine Strombegrenzungseinrichtung SB in Form eines Komparators K2 vorgesehen, dessen einer Vergleichseingang mit dem Strommeßfühler SMF mittelbar oder unmittelbar und dessen anderer Vergleichseingang mit dem Steuereingang des Transistors TS über einen Signalumsetzer SU1 verbunden ist. Der Strommeßfühler SMF erfaßt den Strom I1 durch den Transistor TS. Er umfaßt beispielsweise einen Strommeßwandler SMW, dessen Primärwicklung in der Verbindungsleitung von der Gleichspannungsquelle QE zum Transistor TS oder vom Transistor TS zur Induktivität LS Liegt. Seine Sekundärwicklung ist mit der Antiseriellschaltung einer Diode D1 mit einer Zenerdiode ZD1 überbrückt. Über eine Diode D2 zur Gleichrichtung der Spannung an der Sekundärwicklung ist der Strommeßfühler SMF unmittelbar oder mittelbar über einen nachfolgend noch erläuterten weiteren Signalumsetzer SU2 mit dem anderen Vergleichseingang des Komparators K2 verbunden. Die Strombegrenzungseinrichtung SB verarbeitet so ein Signal in Abhängigkeit der Einschaltimpulse für den Transistor TS und ein Signal in Abhängigkeit des Stromes durch den Transistor TS. Die Strombegrenzungseinrichtung SB spricht an, d.h. sie sperrt den Transistor TS, wenn das Signal U1 in Abhängigkeit des Stromes I1 durch den Transistor TS größer wird als das Signal in Abhängigkeit der Einschaltimpulse für den Transistor TS. Damit genau dieses Verhalten erreicht wird und der Pulsbreitenmodulator PBM sowie der Taktgenerator TG in üblicher Weise arbeiten, ist der Ausgang des Pulsbreitenmodulators PBM über einen Entkopplungswiderstand R9 an ein Verknüpfungsglied in Form eines D-Flip-Flops FF1 und zwar an dessen negierten Takteingang angeschlossen. Ebenso ist der Ausgang des Komparators K2 mit diesem negierten Takteingang über eine Entkoppeldiode DE verbunden. Die Entkopppeldiode DE ist dabei so gepolt, daß das Ausgangssignal des Komparators K2 den Takteingang nur in Richtung negativen Potentials beeinflussen kann. Der zweite Ausgang des Taktgenerators TG, welcher Nadelimpulse mit Taktfrequenz führt, setzt das Flip-Flop FF1 über den S-Eingang. Der Ausgang Q des Flip-Flop FF1, der mit dem Steuereingang des Transistors TS verbunden ist, nimmt den logischen Wert O an und sperrt damit den Transistor TS, wenn am negierten Takteingang eine negative Flanke vom Ausgang des Komparators K2 oder vom Ausgang des Pulsbreitenmodulators PBM erscheint.

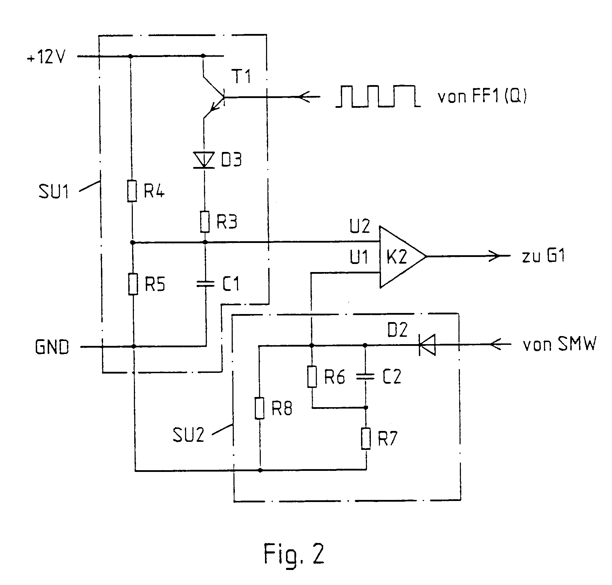

Die Schaltungseinzelheiten für ein Ausführungsbeispiel der Strombegrenzungseinrichtung SB sind in Figur 2 dargestellt. Das Ausgangssignal des Verknüpfungsgliedes FF1 also das Steuersignal für das Stellglied wird einem Transistor T1, der Bestandteil des Signalumsetzers SU1 ist, basisseitig zugeführt. Der Kollektor dieses Transistors ist mit einer Versorgungsspannung von z.B. + 12 V beaufschlagt. In der Emitterleitung des Transistors T1 liegt die Serienschaltung bestehend aus einer Diode D3, einem Widerstand R3 und einem Kondensator C1. Über der Serienschaltung: Kollektor-Emitterstrecke des Transistors T1, Diode D3 und Widerstand R3 liegt ein Widerstand R4 und über dem Kondensator C1 der Widerstand R5. Der Verbindungspunkt dieser beiden Widerstände R4, R5 ist mit dem einen Eingang des Komparators K2 verbunden. Am Kondensator C1 tritt zusammen mit seinem Ladewiderstand R5 die Spannung U2 gegen Bezugspotential GND auf. Sie stellt den arithmetischen gewichteten Mittelwert der Einschaltimpulse für das Stellglied dar. Die Wichtung wird durch das Spannungsteilerverhältnis R3 : R4//R5 erreicht. Durch die Wichtung läßt sich der Gleichspannungswandler an verschiede Betriebsverhältnisse anpassen.

Der Diode D2 ist ein Spannungsteiler R6, R7 als Bestandteil des weiteren Signalumsetzers SU2 nachgeschaltet, der wiederum von einem hochohmigen Widerstand R8, beispielsweise 1 Megohm, überbrückt ist. Die Kathode der Diode D2 ist mit dem einen Eingang des Komparators K2 verbunden. Am Kondensator C2 mit einem Ladewiderstand bestimmt durch die Parallelschaltung der Widerstände R6 und R7 tritt die Spannung U1 gegen Bezugspotential GND auf. Der Spannungsteiler R6, R7 wirkt für das Ausgangssignal des Strommeßfühlers SMF im Sinne einer Dynamikreduzierung. Nur der am Widerstand R7 abfallende Anteil wird zum arithmetischen Mittelwert hinzuaddiert, der am Kondensator C2 erscheint.

Für das Laden des Kodensators ist der relativ niederohmige Widerstand R7, z. B. 100 Ohm, maßgebend. Für das Entladen hingegen ist der hochohmige Widerstand R6 parallel mit R8 maßgebend.

Bisher wurde das Verfahren nach der Erfindung anhand eines Schaltreglers mit Pulsbreitenmodulation erläutert. Das erfindungsgemäße Verfahren läßt sich natürlich auch bei Schaltreglern mit Pulsfrequenzmodulation, insbesondere bei dem Schaltregler gemäß EP 205 630 A1 mit konstanter Energieabgabephase, vorteilhaft einsetzen. Das Ausgangssignal des Pulsfrequenzmodulators oder ein davon abgeleitetes Signal wird dann dem einen Eingang des Komparators der Strombegrenzungseinrichtung zugeführt. Der andere Eingang wird entsprechend mit einem Signal in Abhängigkeit des Stromes durch den Stelltransistor beaufschlagt.

## Patentansprüche

1. Verfahren zum Betreiben eines Schaltreglers mit Pulsbreitensteuerung oder Pulsfrequenzsteuerung des Stellgliedes (TS) über eine Steuereinrichtung, wobei eine Strombegrenzungseinrichtung (SB) vorgesehen ist, der ein Signal in Ahhängigkeit des Stromes (I1) durch das Stellglied (TS) zuführbar ist, dadurch gekennzeichnet, daß der Strombegrenzungseinrichtung (SB) als Referenzsignal ein Signal zugeführt wird, welches direkt aus den Einschaltimpulsen für das Stellglied (TS) gewonnen wird und daß mittels der Strombegrenzungseinrichtung (SB) das Stellglied (TS) gesperrt wird, wenn das Signal in Abhängigkeit des aus den Einschaltimpulsen für das Stellglied (TS) gewonnenen Signals kleiner wird als das Signal in Abhängigkeit des Stromes (I1) durch das Stellglied (TS).

2. Verfahren nach Anspruch 1, dadurch gekennzeichnet, daß aus den Einschaltimpulsen für das Stellglied (TS) zur Weiterverarbeitung durch die Strombegrenzungseinrichtungen (SB) der arithmetische Mittelwert gebildet wird.

3. Verfahren nach Anspruch 1 oder 2, dadurch gekennzeichnet, daß aus dem Strom (I1) durch das Stellglied (TS) ein in der Dynamik reduziertes Signal gewonnen wird, daß dieses in der Dynamik reduzierte Signal zum arithmetischen Mittelwert des nichtreduzierten Signals hinzuaddiert wird.

4. Anordnung für einen Schaltregler zum Durchführen des Verfahrens nach einem der Ansprüche 1 bis 3, bestehend aus:
- einem Pulsbreiten- oder Pulsfrequenzmodulator (PBM), mittels dessen in Abhängigkeit einer Regelgröße, z.B. der Höhe der Ausgangsspannung des Schaltreglers, Einschaltimpulse für das Stellglied (TS) des Schaltreglers erzeugbar sind,
- einem Strommeßfühler (SMF) zur Erfassung des Stromes durch das Stellglied (TS),
- einer Strombegrenzungseinrichtung (SB) zum Vergleich des vom Strommeßfühler (SMF) abgebbaren Signals mit einem direkt vom Ausgangssignal des Pulsbreiten- oder Pulsfrequenzmodulators (PBM) für das Stellglied (TS) abgeleiteten Signals.

5. Anordnung nach Anspruch 4, gekennzeichnet durch
- einen Signalumsetzer (SU1) zwischen dem Steuereingang des Stellgliedes (TS) und einem Vergleichseingang der Strombegrenzungseinrichtung (SB) zur Ermittlung des gewichteten arithmetischen Mittelwertes der Einschaltimpulse für das Stellglied (TS).

6. Anordnung nach Anspruch 4 oder 5, gekennzeichnet durch
- einen Spannungsteiler (R6, R7) zur Gewinnung eines dynamikreduzierten Signals aus dem vom Strommeßfühler (SMF) abgebbaren Signals,
- einem weiteren Signalumsetzer (SU2) zur Verarbeitung des Signals am Spannungsteiler (R6, R7) in dem Sinne, daß das dynamikreduzierte Signal auf den Mittelwert des vom Strommeßfühler (SMF) abgebbaren Signals aufaddiert werden kann.

7. Anordnung nach einem der Ansprüche 4 bis 6, gekennzeichnet durch
- einem Verknüpfungsglied (FF1) zwischen den Ausgängen von Pulsbreiten-/Pulsfrequenzmodulator (PBM), Taktgenerator (TG) und Strombegrenzungseinrichtung SB einerseits und dem Steuereingang des Stellgliedes (TS) andererseits.

## Claims

1. A method of operating a switching controller employing pulse width control or pulse frequency control for the actuator (TS) by way of a control device, with a current limiting device (SB) being provided which receives a signal that is a function of the current (I1) through the actuator (TS), characterized in that the current limiting device (SB) receives as a reference signal a signal that is obtained directly from the turn-on pulses for the actuator (TS) and the actuator (TS) is blocked by means of the current limiting device (SB) if the signal that is a function of the signal obtained from the turn-on pulses for the actuator (TS) becomes smaller than the signal that is a function of the current (I1) through the actuator (TS).

2. A method according to claim 1, characterized in that the arithmetic mean is formed from the turn-on pulses for the actuator (TS) for further processing by the current limiting devices (SB).

3. A method according to claim 1 or 2, characterized in that a reduced dynamics signal is obtained from the current (I1) through the actuator (TS) and this reduced dynamics signal is added to the arithmetic mean of the non-reduced signal.

4. An arrangement for a switching controller for implementing the method according to one of claims 1 to 3, characterized by:
- a pulse width or pulse frequency modulator (PBM) by means of which turn-on pulses are generated for the actuator (TS) for the switching controller as a function of a control value, for example the magnitude of the output voltage of the switching controller;
- a current measuring sensor (SMF) for detecting the current through the actuator (TS);
- a current limiting device (SB) for comparing the signal put out by the current measuring sensor (SMF) with a signal derived directly from the output of the pulse width or pulse frequency modulator (PBM) for the actuator (TS).

5. An arrangement according to claim 4, characterized by
- a signal converter (SU1) between the control input of the actuator (TS) and a comparison input of the current limiting device (SB) for determining the weighted arithmetic mean of the turn-on pulses for the actuator (TS).

6. An arrangement according to claim 4 or 5, characterized by
- a voltage divider (R6, R7) for obtaining a reduced dynamics signal from the signal put out by the current measuring sensor (SMF);
- a further signal converter (SU2) for processing the signal at the voltage divider (R6, R7) in the sense that the reduced dynamics signal can be added to the mean value of the signal put out by the current measuring sensor (SMF).

7. An arrangement according to one of claims 4 to 6, characterized by
- a linkage member (FF1) between the outputs of the pulse width/pulse frequency modulator (PBM), the clock pulse generator (TG) and the current limiting device SB, on the one hand, and the control input of the actuator (TS), on the other hand.

## Revendications

1. Procédé pour faire fonctionner un régulateur à commutation possédant une commande du composant de réglage (TS) par impulsions variées en durée ou par impulsions variées en fréquence au moyen d'un dispositif de commande, avec prévision d'un dispositif limiteur de courant (SB) auquel peut être appliqué un signal fonction du courant (I1) traversant le composant de réglage (TS), caractérisé par l'application au dispositif limiteur de courant (SB), en tant que signal de référence, d'un signal qui est obtenu directement à partir des impulsions d'enclenchement pour le composant de réglage (TS) et par le blocage du composant de réglage (TS), au moyen du dispositif limiteur de courant (SB), lorsque le signal fonction du signal obtenu à partir des impulsions d'enclenchement pour le composant de réglage (TS) devient plus petit que le signal fonction du courant (I1) traversant le composant de réglage (TS).

2. Procédé selon la revendication 1, caractérisé par la formation de la valeur moyenne arithmétique des impulsions d'enclenchement pour le composant de réglage (TS) en vue du traitement consécutif par le dispositif limiteur de courant (SB).

3. Procédé selon la revendication 1 ou 2, caractérisé par l'obtention, à partir du courant (I1) traversant le composant de réglage (TS), d'un signal dont la dynamique est réduite et par l'addition de ce signal à dynamique réduite à la valeur moyenne arithmétique du signal non réduit.

4. Dispositif destiné à un régulateur à commutation pour la mise en oeuvre du procédé selon une des revendications 1 à 3, comprenant:
- un modulateur d'impulsions en durée ou en fréquence (PBM), au moyen duquel peuvent être produites, en fonction d'une grandeur de réglage, par exemple de l'amplitude de la tension de sortie du régulateur à commutation, des impulsions d'enclenchement pour le composant de réglage (TS) du régulateur à commutation,
- un capteur ampèremétrique (SMF) pour détecter le courant traversant le composant de réglage (TS) et
- un dispositif limiteur de courant (SB) pour comparer le signal délivré par le capteur dynamométrique (SMF) avec un signal tiré directement du signal de sortie du modulateur d'impulsions en durée ou en fréquence (PBM) pour le composant de réglage (TS).

5. Dispositif selon la revendication 4, caractérisé par un convertisseur de signal (SU1) prévu entre l'entrée de commande du composant de réglage (TS) et une entrée de comparaison du dispositif limiteur de courant (SB) et destiné à déterminer la valeur moyenne arithmétique pondérée des impulsions d'enclenchement pour le composant de réglage (TS).

6. Dispositif selon la revendication 4 ou 5, caractérisé par
- un diviseur de tension (R6, R7) pour l'obtention d'un signal à dynamique réduite à partir du signal délivré par le capteur dynamométrique (SMF) et
- un convertisseur de signal supplémentaire (SU2) pour traiter le signal obtenu sur le diviseur de tension (R6, R7) de manière que le signal à dynamique réduite puisse être ajouté à la valeur moyenne du signal délivré par le capteur dynamométrique (SMF).

7. Dispositif selon une des revendications 4 à 6, caractérisé par un élément logique (FF1) prévu entre les sorties du modulateur d'impulsions en durée ou en fréquence (PBM), de l'horloge (TG) et du dispositif limiteur de courant (SB) d'une part et l'entrée de commande du composant de réglage (TS) d'autre part.
